# EUROPEAN PATENT SPECIFICATION

(11) **EP 2 448 441 B1**
(45) Date of publication and mention of the grant of the patent: **29.05.2013**
(21) Application number: 10744729.4
(22) Date of filing: 30.06.2010
(51) Int. Cl.: A41D 27/24, A43B 9/02, B68G 7/10

(54) **A METHOD FOR MUTUAL BLOCKING OF EDGES OF ELEMENTS OF AN ITEM, IN PARTICULAR FOOTWEAR, CLOTHING AND/OR FURNITURE ITEMS**
VERFAHREN ZUR GEGENSEITIGEN BLOCKIERUNG VON KANTEN DER ELEMENTE EINES OBJEKTS, IM BESONDEREN EINES SCHUHARTIKELS, BEKLEIDUNGSARTIKELS UND/ODER EINRICHTUNGSGEGENSTANDES
PROCÉDÉ POUR BLOCAGE MUTUEL DE BORDS D'ÉLÉMENTS D'UN ARTICLE, EN PARTICULIER D'UNE CHAUSSURE, D'UN VÊTEMENT ET/OU DE MEUBLES

(30) Priority: 01.07.2009 IT BO20090422
(43) Date of publication of application: 09.05.2012
(73) Proprietor: Ciucani Mocassino Machinery S.r.l., 63900 Fermo (FM) (IT)
(72) Inventor: CENTANNI FIORINI, Massimo, I-63023 Fermo (fm) (IT); MONTANI, Giuseppe, I-63015 Monte Urano (ascoli Piceno) (IT)
(74) Representative: Dall'Olio, Christian
(86) International application number: PCT/IB2010/052989
(87) International publication number: WO 2011/001387

(56) References cited:
- DE-C- 387 680
- DE-C1- 3 540 368
- DE-C1- 3 838 145
- FR-A- 1 048 237
- JP-A- 9 136 358

## Description

### Technical Field

The invention relates to the technical sector concerning mutual blocking of edges of elements of an item, with specific reference to footwear, clothing and/or furniture items.

Document FR 1 048 237 discloses a method for mutually blocking edges of elements of an item, comprising the step of frontal longitudinal cutting of edges of a first and second element of an item, to define respectively a first and a second flap in each of the edges.

Document DE 35 40 368 discloses a method for producing a durable connection of layers of material, which connection is also tight under the compression loading of liquids, the edges of said layers of material being bound by a binding strip to be folded in a U-shape, being sewn together and being welded or bonded. When the limbs of the binding strip and the layers of material have been sewn together, the seam and the strip limbs are covered by additional limbs on the binding strip and the edges of the additional limbs projecting beyond the seam and the strip limbs are welded or bonded to the layers of material. A liquid-tight joint connection is achieved in that the strip limbs next to the fabric edges are sewn to the layers of material, the seams are convered by an additional strip provided between them on the binding strip, and their edges projecting beyond the binding strip are welded or bonded to the layers of material.

Document JP 9 136 358 discloses a suturing method for water barrier sheet, using laying water barrier sheets made of rubber or synthetic resin and reinforced by fiber sheet on an executing surface and connecting the edges of the adjacent two sheets by sewing with a sewing machine. The edges of the adjacent two sheets are erected substantially perpendicularly from the executing surface, and the rear surfaces of the edges are mated. Then, the sewing needle of the sewing machine is perpendicularly pierced to the erected edges and sutured while moving a truck with a sewing machine riding on the sheets along the edges of the sheets.

Document DE 38 38 145 discloses a method for welding on a thermoplastic making band, in which the masking bond is fed through a guide apparatus which makes a U-shaped fold In the centre of the masking band. During the welding process, an air stream is passed through the gap between the turnings and the fold which covers them, and prevents the masking band and turnings being welded together by keeping them apart.

### Summary of the Invention

An aim of the present invention is to provide a method for mutually blocking edges of elements of an item which enables a good coupling of the edges to be achieved.

A further aim of the invention is to provide a method for mutually blocking the edges of elements of an item which results in an item having optimal characteristics, from both the functional and the aesthetic points of view.

A still further aim of the invention is that it provides a method which apart from satisfying the preceding advantages exhibits technical-functional-aesthetic characteristics of the zone which is blocked.

A further aim of the invention is to provide a method the enactment of which does not require highly-specialised personnel.

These aims are obtained with what is set out in the claims.

### Brief description of the Drawings.

The characteristics of the invention are set in the following, with particular reference to the accompanying tables of drawings, in which:
figure 1 illustrates a lateral view of the edges of two elements of an item to be mutually blocked;
figures from 2 to 5, and 5A, illustrate a succession of operating stages for mutually blocking edges of two elements of an item;
figure 6 illustrates an example of an item obtained with the method; figure 7 is a further example of an item obtained with the method.

### Description of Preferred Embodiments of the Invention.

With reference to the figures of the drawings, A denotes an item constituted by two elements 1, 2, respectively a first and a second element, following mutual blocking of edges thereof.

The method comprises a frontal longitudinal cutting of the edges B1, B2 of the first and second elements 1,2, identifying in each of the edges B1, B2 respectively a first and a second flap 10-20, 11-21.

Following the realising of the flaps, a flap of the first element 1 is brought together with a flap of the second element 2.

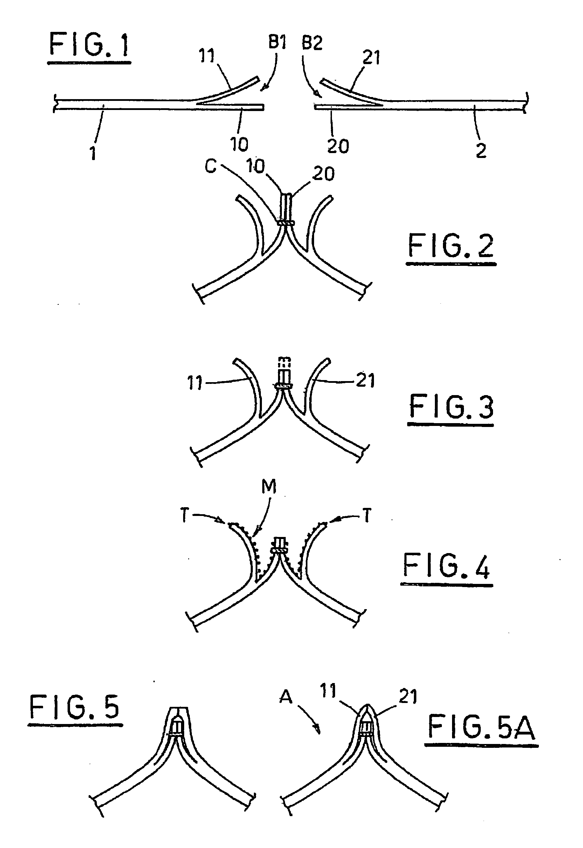

In the embodiment illustrated in figures 2-5A, first the external surfaces of the first flaps 10, 20 of the first and second elements 1, 2 are brought together, and the flaps 10, 20 are then sewn together such that they are blocked along a seam C (figure 2).

Following the blocking, glue M is applied on the opposite surfaces of the first and second flaps 10-20, 11-21, with gluing also taking place on the heads T of the second flaps 11, 22.

Alternatively, following the blocking of the first flaps 10, 20, the first flaps 10, 20 are cut or trimmed externally of the seam position, such as to eliminate the excess terminal portion of the first flaps 10, 20 (figure 3), and then the glue M is applied on the opposite surfaces of the first and second flaps 10-20, 11-21, extending this application to the heads T of the second flaps 11, 22 (figure 4).

The cutting operation of the first flaps 10, 20 can be done previously to the mutual blocking thereof: the first flaps 10, 20 are cut such as to be shorter than the corresponding second flaps 11, 21, and then the external surfaces of the first flaps 10, 20 are brought together and blocked by sewing to make the seam C.

As illustrated in figures 5, 5A, the opposite surfaces of the first and second flaps 10-20, 11-21 are blocked and then the heads T are also blocked, such that the second flaps 11, 21 of the first and second elements 1, 2 close off the sewn portion of the first flaps 10, 20 and the seam C and define the item A.

In a variant of the embodiment which is not illustrated, the adhesive means M can be applied on the internal surfaces of the first and second flaps 10-11, 20-21, following cutting thereof.

The adhesive means are then activatable, by heating to a predetermined temperature, following the sewing of the first flaps 10, 20 of the first and second elements 1, 2, and the bringing-together of the opposite internal surfaces of the first and second flaps 10-20, 11-21, in order to obtain mutual blocking of the surfaces, as previously described.

In further variants of the proposed method, not illustrated, the application of glue can be omitted on the opposite surfaces of the flaps of the first and second element, as following the mutual blocking of one of the flaps of the first element 1 with one of the flaps of the second element 2, and on bringing the opposite surfaces of the flaps of the first and second elements 1, 2 together, the coupling can be stabilised by sewing, metal staples or the like.

The method for mutually blocking the edges of items as described herein exhibits particularly advantageous technical-functional characteristics.

The realising of a seam C closed between the second flaps 11, 21 of a first and second element 1, 2 enables a quality item to be realised; this is due to the fact that the mutual blocking of the elements constituting the item is guaranteed, primarily by the fact that the elements are sewn together and secondly by the fact that the flaps of the elements are further stabilised by the adhesive means provided for finishing the mutual coupling of the edges.

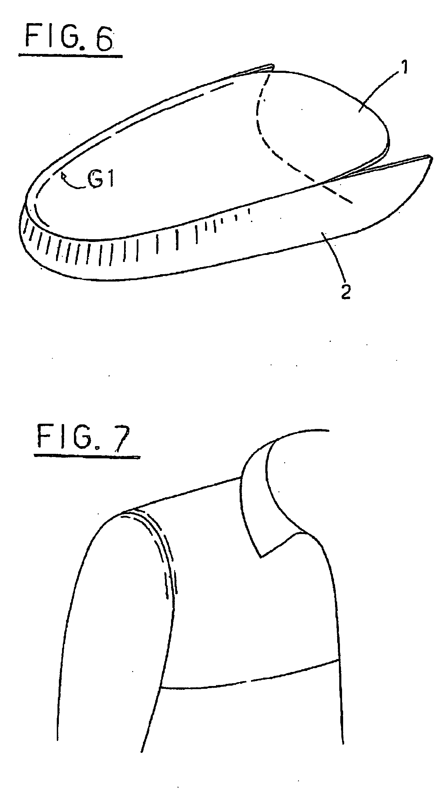

In a case in which the mutual coupling of the edges is realised such as to obtain, for example, a shoe (figure 6), the fact that the seam is hidden internally of the second flaps of the items making up the shoe precludes the possibility that when it rains the water can penetrate into the seam zones, as the seam C is protected by the second flaps of the elements and the adhesive means used for finishing the flaps of the elements.

In a case in which the method of the invention is used to realise, as shown in figure 7, articles of clothing, for example jackets or the like, or for realising articles of furniture, for example divans and/or the like, the fact of realising a hidden seam C is advantageous as random rubbing of some sewn portions is avoided, which in extreme cases can cause laceration of the sewing thread and consequently the decoupling of the elements constituting the item, with all the drawbacks that entails.

The proposed method enables items to be realised which not only have the advantageous technical-functional characteristics described but which also enable an item to be realised which has particularly interesting aesthetic characteristics; as illustrated in figure 6, the couplings between the elements of the vamp.of a shoe are indicated by a join line G1.

Realising an item using the proposed method does not require highly-specialised personnel, as it can be obtained by a simple succession of operating stages, singly actuable, with relative ease, by an expert in the sector.

The above has been described purely by way of non-limiting example, and any eventual variations of a practical-applicational nature are understood to fall within the ambit of protection as described above and as claimed herein below, for example the mutual blocking of the flaps 10, 20 can be actuated with different means to sewing, for example by use of adhesives (gluing), mechanical means and others besides.

## Claims

1. A method for mutually blocking edges of elements of an item, in particular footwear, clothing and/or furniture items comprising following step:
- frontal longitudinal cutting of edges (B1, 82) of a first and a second element (1, 2) of an item, to define respectively a first and a second flap (10 - 20, 11 - 21) in each of the edges (B1, 82);
**characterized in that** it comprises following steps:
- bringing together outer surfaces of the first flaps (10, 20) of the first and second element (1, 2);
- mutual blocking of the first flaps (10, 20) of the first and second element (1, 2);
- bringing together opposite inner surfaces of the first and second flaps (10 - 20, 11 - 21) such as to obtain a mutual blocking of the surfaces and a subsequent embedding of the first flaps (10, 20) between the second flaps (11, 21).

2. The method of claim 1, **characterized in that** the mutual blocking between the first flaps (10, 20) of the first and second element (1, 2) is realized by means of a sewn seam (C).

3. The method of claim 2, **characterised in that** the mutual blocking between the contacting flaps (10, 20) of the first and second element (1, 2) is realised by means of a sewn seam (C).

4. The method of claim 1, **characterised in that** following the mutual blocking of the first flaps (10, 20) of the first and second element (1, 2), adhesive means (M) are applied on internal surfaces of the flaps (10, 20) of the first and second element (1, 2) in order to obtain the mutual blocking of the opposite surfaces.

5. The method of claim 1, **characterized in that** following the frontal longitudinal cutting of the edges (B1, B2) of the first and second element (1, 2), adhesive means are applied on inner surfaces of the first and second flap (10 - 20, 11 - 21) and **in that** the adhesive means are activated after the bringing together of the opposite inner surfaces of the first and second flaps (10 - 20, 11 - 21) such as to obtain the mutual blocking of the surfaces.

6. The method of claim 1, **characterized in that** following the mutual blocking of the first flaps (10, 20) of the first and second element (1, 2), the end portions of the same first flaps (10, 20) are cut.

7. The method of claim 1, **characterized in that** prior to the mutual blocking of the first flaps (10, 20) of the first and second element (1, 2), the first flaps (10,20) are trimmed so that the first flaps (10, 20) are shorter than the second flaps (11, 21).

8. The method of claim 1, **characterized in that** following the bringing-together of the first flaps (10, 20) of the first and second element (1, 2), the first flaps (10, 20) are trimmed such that the first flaps (10, 20) are shorter than the second flaps (11, 21).

9. The method of claim 4 or 5, **characterized in that** adhesive means are applied to the heads (T) of the second flaps (11, 21), contemporaneously with the application of the adhesive means on the inner surfaces of the first and second flaps (10 - 20, 11 - 21)

## Patentansprüche

1. Verfahren zur gegenseitigen Blockierung von Kanten der Elemente eines Objekts, im Besonderen eines Schuhartikels, Bekleidungsartikels und/oder Einrichtungsgegenstandes, folgenden Schritt beinhaltend:
- frontales Einschneiden in Längsrichtung der Kanten (B1, B2) eines ersten und eines zweiten Elementes (1, 2) eines Gegenstandes, um jeweils eine erste beziehungsweise zweite Lasche (10 - 20, 11 - 21) an jeder der Kanten (B1, B2) auszubilden;
**dadurch gekennzeichnet, dass** es folgende Schritte beinhaltet:
- Zusammenpassen der Außenoberflächen der ersten Laschen (10, 20) des ersten und zweiten Elementes (1, 2);
- gegenseitiges Blockieren der ersten Laschen (10, 20) des ersten und zweiten Elementes (1, 2);
- Zusammenpassen einander gegenüberliegender innerer Oberflächen der ersten und zweiten Laschen (10 - 20, 11 - 21), um eine gegenseitige Blockierung der Oberflächen und ein daraus folgendes Einschließen der ersten Laschen (10, 20) zwischen den zweiten Laschen (11, 21) zu erhalten.

2. Verfahren nach Anspruch 1, **dadurch gekennzeichnet, dass** die gegenseitige Blockierung zwischen den ersten Laschen (10, 20) des ersten und zweiten Elementes (1, 2) durch eine Nähnaht (C) hergestellt wird.

3. Verfahren nach Anspruch 2, **dadurch gekennzeichnet, dass** die gegenseitige Blockierung zwischen den einander berührenden Laschen (10, 20) des ersten und zweiten Elementes (1, 2) durch eine Nähnaht (C) hergestellt wird.

4. Verfahren nach Anspruch 1, **dadurch gekennzeichnet, dass** im Anschluss an die gegenseitige Blockierung der ersten Laschen (10, 20) des ersten und zweiten Elementes (1, 2), Klebemittel (M) auf innere Oberflächen der Laschen (10, 20) des ersten und zweiten Elementes (1, 2) aufgetragen wird, um die gegenseitige Blockierung der einander gegenüberliegenden Oberflächen zu erhalten.

5. Verfahren nach Anspruch 1, **dadurch gekennzeichnet, dass** im Anschluss an das frontale Einschneiden in Längsrichtung der Kanten (B1, B2) des ersten und zweiten Elementes (1, 2) Klebemittel auf innere Oberflächen der ersten und zweiten Lasche (10 - 20, 11 - 21) aufgetragen wird und dadurch, dass das Klebemittel nach dem Zusammenpassen der einander gegenüberliegenden inneren Oberflächen der ersten und zweiten Laschen (10 - 20, 11 - 21) aktiviert wird, um die gegenseitige Blockierung der Oberflächen zu erhalten.

6. Verfahren nach Anspruch 1, **dadurch gekennzeichnet, dass** im Anschluss an die gegenseitige Blockierung der ersten Laschen (10, 20) des ersten und zweiten Elementes (1, 2), die Endabschnitte dieser ersten Laschen (10, 20) abgeschnitten werden.

7. Verfahren nach Anspruch 1, **dadurch gekennzeichnet, dass** vor der gegenseitigen Blockierung der ersten Laschen (10, 20) des ersten und zweiten Elementes (1, 2) die ersten Laschen (10, 20) so abgeschnitten werden, dass die ersten Laschen (10, 20) kürzer sind als die zweiten Laschen (11, 21).

8. Verfahren nach Anspruch 1, **dadurch gekennzeichnet, dass** im Anschluss an das Zusammenpassen der ersten Laschen (10, 20) des ersten und zweiten Elementes (1, 2), die ersten Laschen (10, 20) so abgeschnitten werden, dass die ersten Laschen (10, 20) kürzer sind als die zweiten Laschen (11,21).

9. Verfahren nach Anspruch 4 oder 5, **dadurch gekennzeichnet, dass** gleichzeitig mit dem Auftragen von Klebemittel auf die inneren Oberflächen der ersten und zweiten Laschen (10 - 20, 11 - 21) Klebemittel auf die Köpfe (T) der zweiten Laschen (11, 21) aufgetragen wird.

## Revendications

1. Un procédé pour le blocage mutuel de bords d'éléments d'un article, en particulier de chaussures, de vêtements et/ou de meubles, comprenant la phase suivante:
- incision frontale longitudinale de bords (B1, B2) d'un premier et d'un deuxième élément (1, 2) d'un article, pour définir respectivement une première et une deuxième patte (10 - 20, 11 - 21) dans chacun des bords (B1, B2) ;
**caractérisé en ce qu'**il comprend les phases suivantes :
- unir des surfaces extérieures des premières pattes (10, 20) du premier et deuxième élément (1, 2) ;
- bloquer mutuellement les premières pattes (10, 20) du premier et deuxième élément (1, 2) ;
- unir des surfaces intérieures opposées des première et deuxième pattes (10 - 20, 11 - 21) de manière à obtenir un blocage mutuel des surfaces et une imbrication subséquente des premières pattes (10, 20) entre les deuxièmes pattes (11, 21).

2. Le procédé selon la revendication 1, **caractérisé en ce que** le blocage mutuel entre les premières pattes (10, 20) du premier et deuxième élément (1, 2) est réalisé par le biais d'une couture (C).

3. Le procédé selon la revendication 2, **caractérisé en ce que** le blocage mutuel entre les pattes en contact (10, 20) du premier et deuxième élément (1, 2) est réalisé par le biais d'une couture (C).

4. Le procédé selon la revendication 1, **caractérisé en ce que**, après le blocage mutuel des premières pattes (10, 20) du premier et deuxième élément (1, 2), des moyens adhésifs (M) sont appliqués sur les surfaces intérieures des pattes (10, 20) du premier et deuxième élément (1, 2) de manière à obtenir le blocage mutuel des surfaces opposées.

5. Le procédé selon la revendication 1, **caractérisé en ce que**, après l'incision frontale longitudinale des bords (B1, B2) du premier et deuxième élément (1, 2), des moyens adhésifs sont appliqués sur les surfaces intérieures de la première et deuxième patte (10 - 20, 11 - 21) et **en ce que** les moyens adhésifs sont activés après l'union des surfaces intérieures opposées des première et deuxième pattes (10 - 20, 11 - 21) de manière à obtenir le blocage mutuel des surfaces.

6. Le procédé selon la revendication 1, **caractérisé en ce que**, après le blocage mutuel des premières pattes (10, 20) du premier et deuxième élément (1, 2), les portions d'extrémité de ces mêmes premières pattes (10, 20) sont coupées.

7. Le procédé selon la revendication 1, **caractérisé en ce que**, avant le blocage mutuel des premières pattes (10, 20) du premier et deuxième élément (1, 2), les premières pattes (10, 20) sont coupées de manière à ce que ces mêmes premières pattes (10, 20) soient plus courtes que les deuxièmes pattes (11, 21).

8. Le procédé selon la revendication 1, **caractérisé en ce que**, après l'union des premières pattes (10, 20) du premier et deuxième élément (1, 2), les premières pattes (10, 20) sont coupées de manière à ce que ces mêmes premières pattes (10, 20) soient plus courtes que les deuxièmes pattes (11, 21).

9. Le procédé selon la revendication 4 ou 5, **caractérisé en ce que** des moyens adhésifs sont appliqués sur les têtes (T) des deuxièmes pattes (11, 21), en même temps que l'application des moyens adhésifs sur les surfaces intérieures des premières et deuxièmes pattes (10 - 20, 11 - 21).
